# FASCICULE DE BREVET EUROPEEN

(11) **EP 3 483 358 B1**
(45) Date de publication et mention de la délivrance du brevet: **15.12.2021**
(21) Numéro de dépôt: 18202531.2
(22) Date de dépôt: 25.10.2018
(51) Int. Cl.: B32B 5/02, B32B 5/16, B32B 5/24, B32B 5/30, B32B 27/08, B32B 27/12, B32B 27/14, B32B 27/18, B32B 27/20, B32B 27/22, E04F 15/10, E04F 15/22, B32B 27/30

(54) **PANNEAU RIGIDE POUR LA REALISATION D'UN REVETEMENT DE SOL**
STARRES PANEEL FÜR DIE AUSFÜHRUNG EINES BODENBELAGS
RIGID PANEL FOR FORMING A FLOOR COVERING

(30) Priorité: 13.11.2017 FR 1760628
(43) Date de publication de la demande: 15.05.2019
(60) Demande divisionnaire: 21203554.7
(73) Titulaire: GERFLOR, 69100 Villeurbanne (FR)
(72) Inventeur: ESBELIN, Christian, 84500 Bollène (FR)
(74) Mandataire: Cabinet Laurent & Charras

(56) Documents cités:
- EP-A1- 3 020 885
- WO-A1-2014/181031
- WO-A1-2016/043453
- WO-A1-2017/027155
- WO-A2-2007/109100
- KR-B1- 101 627 732
- US-A1- 2014 227 475

## Description

### DOMAINE TECHNIQUE

La présente invention concerne le secteur technique des revêtements de sols et plus particulièrement un panneau de sol pour la réalisation d'un revêtement de sol ou similaire. Le panneau selon l'invention présente une forme de dalle ou de lame, est réalisé dans une matière plastique telle que le Polychlorure de Vinyle (PVC) et présente de bonnes propriétés mécaniques.

### ART ANTERIEUR

Il est bien connu de réaliser des revêtements de sols à partir d'éléments modulaires sous formes de lames ou de dalles. Ces éléments modulaires peuvent être collés sur le sol ou posés en pose libre, notamment lorsqu'ils présentent des moyens mâles-femelles d'assemblage. De tels moyens mâles-femelles de liaison ou d'assemblage de panneaux sont notamment décrits dans les documents GB 2 256 023, EP 1 026 341, WO 2012/004701, EP 2 843 153 ou encore WO 2016/030627.

Il est notamment connu des revêtements de sol sous forme de lames et de dalles réalisés à partir de plusieurs couches de PVC plastifié, ceux-ci étant particulièrement avantageux car ils sont plus faciles à transporter que des rouleaux de revêtements de sol PVC. Leur pose est aussi simple et rapide. Ils sont ainsi souvent utilisés en rénovation pour recouvrir des sols existants.

Cependant, ce type de revêtement présente généralement une faible résistance au poinçonnement, à la rayure et au ripage.

D'autre part, ce type de revêtement présente de faibles performances en matière de stabilité dimensionnelle selon les critères retenus dans la norme NF EN ISO 23999 d'avril 2012. En effet, lorsque ce type de revêtement est soumis à de fortes variations de température, notamment lorsqu'il est posé derrière des baies vitrées, des phénomènes de retrait ou de dilatation peuvent être observés. Ces phénomènes entraînent l'apparition de défauts comme : le « doming » (les panneaux s'incurvent et se décollent localement du sol en formant une bosse), de déclipsage des moyens d'assemblage ou encore d'apparition de jeux entre deux panneaux consécutifs.

Pour remédier à cet inconvénient, une solution peut consister à coller systématiquement ce type de revêtement, même s'il comprend des moyens d'assemblage, dans des zones soumise à de fortes variations de température. Cette méthode est cependant fastidieuse car elle augmente le temps de pose et sa technicité. De plus elle contraint toujours l'utilisateur à respecter une température de la pièce lors de la pose d'environ 20°C.

Par ailleurs, le document EP 3020885 A1 ainsi que les documents US 2014/227475 A1 et KR 101 627 732 B1 divulguent un panneau multicouche.

### EXPOSE DE L'INVENTION

L'un des buts de l'invention est donc de proposer un panneau de sol réalisé à partir de PVC pour la réalisation d'un revêtement de sol ou similaire présentant de très bonnes performances en matière de résistance au poinçonnement, à l'abrasion et au ripage tout en conservant, voire en améliorant la stabilité dimensionnelle.

Un autre objectif est de proposer un panneau de sol résistant à un passage de 25000 cycles minimum d'une chaise à roulettes double bande tel que défini dans la norme ISO 4918 ou NF EN 425.

Un autre objectif est de proposer un panneau de sol classé P4 voire P4S selon le classement U.P.E.C. Un objectif est notamment de proposer un panneau de sol présentant une valeur de poinçonnement inférieure ou égale à 0,20mm, préférentiellement inférieure ou égale à 0,15 mm entre deux mesures de valeur de poinçonnement statique rémanent réalisées selon la norme NF EN 433. Un autre objectif est de proposer un panneau de sol présentant des valeurs de ripage conformes au niveau r1 voire r2 défini selon la méthode de « Détermination de la résistance au ripage _ Essai Mr.bis » décrite dans le e-Cahier n°3562 du Centre Scientifique et Technique du Bâtiment de mars 2007. Ce test consiste à rechercher la contrainte à appliquer sur un clou tronqué en acier de 3mm de diamètre, à partir de laquelle il y a pénétration irréversible (contrainte critique), et la contrainte à partir de laquelle il y a perforation du revêtement (contrainte maximale). Le niveau r1 est obtenu si la contrainte maximale est supérieure ou égale à 7N/mm². Le niveau r2 est obtenu si la contrainte critique est supérieure ou égale à 30N/mm² et si la contrainte maximale est supérieure ou égale à 1,5 fois la contrainte critique, ce qui correspond à une contrainte maximale supérieure ou égale 45N/ mm².

A cet effet, il est proposé un panneau multicouche selon la revendication 1.

La couche d'usure selon l'invention comprend une couche de surface présentant une dureté Shore D supérieure ou égale à 60 et un module d'Young supérieur ou égal à 1000 MPa. Cette couche de surface rigide est disposée dans la partie supérieure de la couche d'usure, de sorte que la face supérieure de la couche de surface puisse être en contact avec l'utilisateur. Cette couche de surface est donc directement exposée à l'usure due au trafic, à l'exception des cas où cette couche de surface est recouverte d'un vernis. De façon non limitative, la couche de surface selon l'invention pourra être grainée et/ou recouverte d'un vernis en surface, notamment afin de faciliter son entretien.

L'intégration d'une couche de surface présentant une dureté Shore D supérieure ou égale à 60 et un module d'Young supérieur ou égal à 1000 MPa composée au moins de PVC dans la couche d'usure d'un panneau multicouche permet d'améliorer les propriétés de résistance au poinçonnement, à l'abrasion et au ripage du panneau tout en conservant voire en améliorant la stabilité dimensionnelle du panneau. La stabilité dimensionnelle du panneau est améliorée car la couche de surface est rigide et permet de contrebalancer les effets de dilatation et de retrait de la couche d'envers lors de grandes variations de température, notamment entre 0°C et 50°C. Le terme rigide signifie dans le cas de la couche de surface que celle-ci présente une dureté Shore D supérieure ou égale à 60, préférentiellement supérieure ou égale à 70 et un module d'Young supérieur ou égal à 1000 MPa, préférentiellement supérieur ou égal à 1500 MPa.

Avantageusement, la couche de surface présente une dureté Shore D supérieure ou égale à 70. Une dureté Shore D supérieure ou égale à 70 permet essentiellement d'améliorer la résistance au poinçonnement, à l'abrasion et au ripage, la couche étant plus rigide en surface.

Avantageusement, la couche de surface présente un module d'Young supérieur ou égal à 1500 MPa. Un module d'Young supérieur ou égal à 1500 MPa permet essentiellement d'améliorer la résistance au poinçonnement, à l'abrasion et au ripage et la stabilité dimensionnelle du panneau multicouche, le panneau étant plus rigide dans son ensemble.

Avantageusement, la couche de surface est transparente. La couche de surface peut être transparente ou translucide de manière à ce qu'une couche décor liée en envers de la couche de surface puisse être visible au travers de la couche de surface. Dans le cas d'une couche de surface transparente ou translucide, le décor peut être apporté par une couche décor comprise dans la couche d'usure, et liée en envers de la couche de surface. La couche décor peut notamment consister en un film décor pouvant être obtenu à partir d'un film PVC imprimé sur l'une de ses faces. Des techniques d'impression connues sont notamment l'héliogravure. La couche décor peut également être imprimée directement en envers de la couche de surface. La couche décor peut également être obtenue à partir de granulés réalisés à partir de PVC puis pressés, par enduction de plastisol, par extrusion filière plate, par calandrage ou toute autre technique bien connue de l'homme du métier.

La couche décor peut alternativement être obtenue en réalisant un complexe d'impression comprenant un voile de verre enduit d'un plastisol PVC gélifié sur ses deux faces. La face destinée à être liée en regard de le couche de surface est alors imprimée, par exemple par héliogravure. Le voile de verre améliore la stabilité dimensionnelle du revêtement de sol et augmente la résistance à la déchirure par rapport à un film imprimé classique. La résistance à la perforation est également améliorée par rapport à un film imprimé. Un tel complexe d'impression présente généralement une épaisseur comprise entre 0,5 et 1mm et une masse surfacique comprise entre 700 et 1200 g/mm².

La couche de surface peut notamment être rendue translucide par incorporation dans sa composition, de pigments ou de charges, en quantité suffisamment faible pour permettre l'observation d'un décor disposé en envers de ladite couche.

La couche de surface peut également être rendue opaque afin d'apporter une fonction de décor au panneau. Dans ce cas, la composition de la couche de surface comprend des pigments et/ou des charges en quantité suffisamment importante pour la rendre opaque. Des techniques connues pour obtenir un décor dans l'épaisseur d'une couche de surface consistent notamment à presser des granulés réalisés à partir de PVC colorés de différentes teintes distribués de façon statistique, afin d'obtenir des décors « mouchetés » non directionnels. Ces couches décor peuvent également être produites par calandrage ou par extrusion d'un « dry blend » gélifié, notamment afin d'obtenir des décors « mouchetés » directionnels ou unis. Des charges sont notamment des charges inorganiques, par exemple des argiles, de la silice, du kaolin, du talc, du carbonate de calcium.

De façon avantageuse, la couche de surface comprend entre 0% et 90% de charges en masse de la couche, avantageusement entre 10% et 60% en masse de la couche. Selon la présente invention, la couche de surface comprend des absorbeurs de chocs. L'incorporation d'absorbeurs de chocs permet de rendre la couche de surface moins cassante, notamment à basse température, en fonction des applications considérées pour le panneau selon l'invention.

L'incorporation d'absorbeurs de chocs permet notamment de rendre une couche rigide moins cassante à des températures inférieures à 20°C, voire inférieures à 10°C, ce qui n'est pas courant dans une habitation mais peut causer des casses lors de la pose du revêtement, ou lors des opérations de transport et de stockage dans des zones non régulées en température.

Avantageusement, les absorbeurs de chocs pouvant être utilisés sont des particules polymériques élastomériques. Ces particules polymériques élastomériques sont appelées « core-shell particles» en langue anglaise et sont bien connues de l'homme du métier. Celles-ci sont formées d'une coquille thermoplastique « dure », préférentiellement à base d'un polymère acrylate, par exemple le polyméthacrylate de méthyle (PMMA), et d'un coeur élastomérique généralement à base de butadiène, souvent copolymérisé avec du styrène, ou à base acrylique.

Avantageusement, la couche de surface comprend des particules polymériques élastomériques.

On peut notamment citer pour l'obtention d'un coeur élastomérique, les polymères acrylonitrile-butadiène-styrène (ABS), les polymères acrylonitrile styrène acrylate (ASA), les polymères méthacrylate-butadiène-styrène (MBS), les polymères méthacrylateacrylonitrile- butadiène-styrène (MABS), les copolymères éthylène/vinyle acétate (EVA), éthylène/vinyle acrylate (E/VAC), les terpolymères greffés chlorure de vinyle / vinyleacrylate / éthylène (E/VAC/VC), les polyéthylène chlorés (CPE); les élastomères polyuréthanes (PUR), le butadiène/2-vinylpyridine, le butadiène/méthyle isoproprényle kétone, les copolymère butadiène/ester fumarique et les mélanges de ceux-ci.

Ces absorbeurs de chocs contiennent ainsi un coeur élastomérique réticulé ou faiblement réticulé, entouré d'une coquille thermoplastique, souvent un polymère de méthacrylate de méthyle (PMMA). Un coeur élastomérique faiblement réticulé permet notamment d'améliorer la résistance à l'impact de la couche de surface obtenue. Les brevets US 3,985,703, US 4,304,709, US 6,433,091, EP 1256615 ou US 6,869,497 décrivent notamment de telles particules, qui sont ainsi bien connues de l'homme du métier. Les polymères core-shell sont disponibles auprès de nombreux fournisseurs.

A titre d'exemples, il est possible d'utiliser comme absorbeurs de chocs les particules MBS Clearstrength C301, C303H, C223, C350, C351, E920 ou C859 de la société Arkema, les MBS C301 et C303H étant préférées. Les particules Durastrength D300 ou D340 de la société Arkema, présentant un coeur acrylique entouré d'une enveloppe PMMA sont également utilisables. De même, on peut également employer les MBS développés par la société Rohm et Haas, notamment le Paraloid^{™} BTA 753, l'Advastab, ou l'Advalube, les copolymères styrène/anhydride-maléique modifiés par un caoutchouc tel que les polymères de la série Elix 300 commercialisé par la société Monsanto. D'autres absorbeurs de chocs tels que les polymères Hytrel 3495 commercialisé par la société DuPont, ou CPE commercialisé sous la marque Tyrin par la société DuPont, ainsi que la gamme dénommées Kane Ace MX commercialisée par la société Kaneka sont également utilisables.

Avantageusement, les absorbeurs de chocs sont des plastifiants polymériques. Des plastifiants polymériques pouvant également être utilisés selon l'invention sont les copolymères et terpolymères de la série Elvaloy et Elvaloy HP commercialisés par la société Dupont, les particules de polyuréthane thermoplastique (TPU) notamment commercialisées par la société BASF sous la gamme Elastollan, ou par la société Lanxess sous la gamme Baymod. Ces TPU peuvent être aromatiques, plus préférentiellement aliphatiques, formés à partir de polyols polyéthers, ou plus préférentiellement formés à partir de polyols polyesters, formés à partir de dérivés caprolactone ou formés à partir de copolyesters thermoplastiques.

Avantageusement, la couche de surface comprend des plastifiants polymériques.

Les différents absorbeurs de chocs cités peuvent être utilisés seuls ou en mélange.

De façon préférentielle et de manière à obtenir une couche de surface transparente, les absorbeurs de chocs sont choisis en fonction de leur indice de réfraction pour que leur incorporation ne modifie pas l'indice de réfraction de la composition obtenue par rapport à l'indice de réfraction du PVC seul. L'indice de réfraction des absorbeurs de chocs incorporés et notamment compris entre 1,52 et 1,55 à 20°C.

De préférence, la proportion d'absorbeurs de chocs en masse de la couche de surface est inférieure à 25 %, de préférence comprise entre 2,5 % et 15 % en masse de la couche de surface. La quantité d' absorbeurs de chocs en masse de la couche dépend du grade d'absorbeurs de chocs utilisé, et notamment de la longueur de chaîne du plus long des polymères formant l'absorbeur de chocs. Cette quantité pourra aisément être adaptée par l'homme du métier en fonction de la température de transition vitreuse de la composition de la couche de surface obtenue.

Selon un mode de réalisation particulier de l'invention, la composition de la couche de surface présente une température de transition vitreuse (Tg) comprise entre 60°C et 80°C, préférentiellement entre 70°C et 80°C. Cette température de transition vitreuse supérieure à la température généralement observée dans une pièce susceptible d'accueillir du public, permet de garantir que la couche de surface se ramollira peu dans des conditions d'usage normal, ce qui garantira la stabilité dimensionnelle de l'ensemble du panneau selon l'invention.

Avantageusement, la couche de surface peut être obtenue à partir d'une composition comprenant au moins un plastifiant liquide, non polymérique, la proportion de plastifiant liquide en masse de la couche de surface étant inférieure à 10 %, préférentiellement inférieure ou égale à 5%. Une proportion de plastifiant liquide inférieure à 10 % augmente la rigidité du panneau multicouche tout en permettant que cette couche de surface soit réalisable par des procédés classiques de calandrage ou d'extrusion. Une proportion de plastifiant liquide inférieure ou égale à 5% augmente encore la rigidité du panneau multicouche ainsi que la résistance au poinçonnement, à l'abrasion et au ripage et la stabilité dimensionnelle du panneau.

L'incorporation d'une quantité de plastifiant liquide inférieure à 10 % en masse de la couche de surface permet à la couche de surface rigide d'être plus simple à transformer et d'être moins cassante tout en conservant de bonnes propriétés de stabilité dimensionnelle. La présence d'un faible taux de plastifiant liquide , soit inférieur à 10% en masse de la couche de surface, facilite également la mise en œuvre du PVC à une température inférieure ou égale à 180°C, limitant ainsi les risques de dégradation de la matière. Cette propriété est particulièrement avantageuse dans les procédés de fabrication d'une couche de surface par calandrage. L'incorporation d'une quantité de plastifiant liquide inférieure à 5 %, plus préférentiellement entre 1 et 5% en masse de la couche du surface permet d'obtenir un meilleur compromis entre les propriétés de stabilité dimensionnelle, de résistance à l'abrasion et à la rayure.

Selon un mode de réalisation particulier de l'invention, la masse moléculaire du PVC utilisé pour la réalisation de la couche de surface, traditionnellement liée à la valeur K ou « K-wert » dont la définition est bien connue de l'homme du métier, est comprise entre 50 et 85, préférentiellement 50 et 75, et très préférentiellement 50 et 64. Ceci permet notamment de s'assurer que la composition de la couche de PVC rigide puisse être transformée selon des procédés tels que le calandrage ou le pressage en continu, à une température inférieure ou égale à 180°C.

De préférence, la couche de surface présente une épaisseur comprise entre 0,1 et 3mm, préférentiellement entre 0,3 et 2,5mm, plus préférentiellement entre 0,5 et 2mm. L'épaisseur de la couche de surface pourra être déterminée en fonction de l'usage recherché pour le panneau selon l'invention. Une couche de surface dont l'épaisseur est comprise entre 0,1 mm et 1 mm correspond notamment à l'épaisseur classique des couches de surface des panneaux LVT (pour « Luxury Vinyl Tile »).

De façon préférentielle, la couche de surface présente une épaisseur comprise entre 5 % et 30% de l'épaisseur totale du panneau. Plus l'épaisseur de la couche de surface est importante relativement à l'épaisseur totale du panneau, plus les dimensions du panneau obtenu seront stables en fonction de la température. Une épaisseur minimale de la couche de surface améliorera légèrement la stabilité dimensionnelle du panneau et permettra d'obtenir une bonne résistance à la rayure. En augmentant l'épaisseur de la couche de surface, dans la limite de 30% de l'épaisseur totale du panneau, la stabilité dimensionnelle et la résistance au poinçonnement du panneau seront optimisées.

Selon l'invention, la couche d'envers peut être compacte, ou moussée. Elle peut être obtenue par tout procédé bien connu de l'homme du métier, notamment par calandrage, par pressage, par extrusion ou encore par enduction. Elle peut être obtenue à partir de PVC plastifié. De façon générale et d'une manière bien connue de l'homme du métier, une couche d'envers peut être obtenue à partir d'une composition comprenant une matière thermoplastique tel qu'un polymère thermoplastique, par exemple du PVC, un plastifiant, des charges et éventuellement des stabilisants, lubrifiants, additifs et pigments. Alternativement, le polymère thermoplastique peut être remplacé totalement ou partiellement par du caoutchouc, naturel ou synthétique, du linoléum ou encore du polyester.

De façon générale, une couche d'envers et une couche en PVC plastifié pouvant être obtenue avec une composition comprenant environ 30% de PVC, environ 10% de plastifiants, environ 5% d'additifs (aides-procédé, stabilisants, pigments) et environ 55% de charges. De façon préférentielle, une couche d'envers peut être obtenue à partir d'une première couche d'envers et d'une seconde couche d'envers liées entre elles par l'intermédiaire d'une armature de renfort tel qu'un voile de verre. A titre d'exemple, la première couche d'envers comprend environ 33% de PVC, 10% de plastifiants (DINP), 4% d'additifs (aides-procédé, stabilisants, pigments), 3 % de particules de PVC mélangées à des fibres de verre et 50% de charges ; la seconde couche d'envers comprend environ 33% de PVC, 10% de plastifiants (DINP), 4% d'additifs (aides procédé, stabilisants, pigments) et 53% de charges.

De préférence, et pour augmenter les performances mécaniques et la résistance au poinçonnement et au ripage et améliorer encore la stabilité dimensionnelle du panneau dans le temps, la couche d'envers comprend une armature de renfort. Une armature de renfort peut être obtenue à partir d'un textile tissé ou non-tissé, ou encore à partir d'une grille et/ou d'un voile de verre, une grille et un voile de verre pouvant être complexés. En incorporant une couche de surface en PVC rigide au panneau, et en fonction de l'épaisseur de cette couche de surface par rapport à l'épaisseur totale du panneau, il se peut que la différence de rigidité entre la couche de surface et le reste des couches du panneau entraîne des phénomènes de « doming » ou de « curling », c'est-à-dire une incurvation du panneau dans un sens ou dans l'autre. Ce phénomène apparaît en réponse à un mauvais équilibrage des contraintes mécaniques entre les couches du panneau. L'ajout d'une ou plusieurs armatures de renfort dans la couche d'envers permet de rigidifier la couche d'envers et d'équilibrer ainsi le panneau dans son ensemble.

Une armature de renfort se présente par exemple sous la forme d'une grille ou d'un quadrillage de fils textiles d'épaisseur négligeable. Les fils textiles de ladite armature de renfort sont par exemple obtenus à partir de fibres de verre, et sont de préférence espacés les uns des autres de 3 mm, selon les dimensions longitudinale et transversale, et présentent une masse linéique comprise entre 20 g/m et 70 g/m, avantageusement entre 35 g/m et 50 g/m. Une armature de renfort peut également consister en un voile de fibres de verre ou de fibres de polyester d'une masse surfacique comprise entre 40 g/m² et 100 g/m².

Alternativement, ou de façon complémentaire, pour augmenter les performances mécaniques, la résistance au poinçonnement et au ripage et améliorer encore la stabilité dimensionnelle du panneau, la couche d'envers peut comprendre une couche d'équilibrage, composée au moins de PVC. Une couche d'équilibrage permet notamment d'équilibrer les tensions dans le panneau multicouche créés par la couche de surface selon l'invention.. Avantageusement, la couche d'équilibrage est une couche d'équilibrage des tensions dans le panneau multicouche créées par la couche de surface selon l'invention. La couche d'équilibrage est obtenue par tout moyen décrit pour l'obtention de la couche de surface selon l'invention.

Avantageusement, la couche d'équilibrage présente une dureté Shore D supérieure ou égale à 50, avantageusement supérieure ou égale à 60, préférentiellement supérieure ou égale à 70 et un module d'Young supérieur ou égal à 500 MPa, avantageusement supérieur ou égal à 1000 MPa, préférentiellement supérieur ou égal à 1500 MPa. La couche d'équilibrage est ainsi suffisamment rigide voire aussi rigide que la couche de surface afin d'augmenter la rigidité du panneau. La rigidité de la couche d'équilibrage pouvant être adaptée en fonction des différences d'épaisseur des couches de surface et d'équilibrage et de leurs compositions.

Une couche d'équilibrage composée au moins de PVC peut notamment être obtenue à partir d'une composition comprenant une proportion de plastifiant liquide inférieure à 15% en masse de la couche, préférentiellement inférieure ou égale à 10% en masse de la couche, plus préférentiellement inférieure ou égale à 5% en masse de la couche.

Avantageusement la composition de la couche d'équilibrage comprend des absorbeurs de chocs tels que définis précédemment, préférentiellement des particules polymériques élastomériques. De préférence, la proportion d'absorbeurs de chocs dans la composition de la couche d'équilibrage est inférieure 25 % en masse de la couche d'équilibrage, de préférence entre 2,5 % et 15 % en masse de la couche d'équilibrage. La quantité d' absorbeurs de chocs en masse de la couche dépend du grade d'absorbeurs de chocs utilisé, et notamment de la longueur de chaîne du plus long des polymères formant l'absorbeur de chocs. Cette quantité pourra aisément être adaptée par l'homme du métier en fonction de la température de transition vitreuse de la composition de la couche d'équilibrage obtenue.

Selon un mode de réalisation particulier de l'invention, la composition de la couche d'équilibrage présente une température de transition vitreuse (Tg) comprise entre 60 et 80°C, préférentiellement entre 70 et 80°C. Cette température de transition vitreuse supérieure à la température généralement observée dans une pièce susceptible d'accueillir du public, permet de garantir que la couche d'équilibrage se ramollira peu dans des conditions d'usage normal, ce qui garantira la stabilité dimensionnelle de l'ensemble du panneau selon l'invention.

Préférentiellement, la couche d'envers est une couche d'équilibrage composée au moins de PVC.

Une couche d'équilibrage composée au moins de PVC permet de diminuer la différence de rigidité entre la couche de surface et le reste des couches du panneau et empêche ainsi l'apparition de phénomène d'incurvation du panneau. Plus la dureté Shore est supérieure à 50 et le module d'Young est supérieur à 500 MPa et plus la rigidité du panneau obtenu est augmentée et donc sa stabilité dimensionelle. L'ajout d'une ou de plusieurs couche(s) d'équilibrage réalisée(s) à partir de PVC dans la couche d'envers permet ainsi de rigidifier la couche d'envers, et d'équilibrer le panneau dans son ensemble. Cette couche d'équilibrage peut être disposée dans la partie inférieure de la couche d'envers, de sorte qu'une face de la couche d'équilibrage soit en contact avec le sol. Alternativement cette couche d'équilibrage peut être disposée dans la partie centrale de la couche d'envers afin d'équilibrer la structure du produit et/ou de remplacer une armature de renfort.

Alternativement cette couche d'équilibrage peut être disposée dans la partie supérieure de la couche d'envers au contact de la couche d'usure. Avantageusement, la couche d'équilibrage est liée à la couche d'usure. Dans le cas ou ladite couche d'équilibrage est liée à la couche d'usure, la résistance au poinçonnement, à la rayure et au ripage sont améliorées. Ce mode de réalisation est notamment intéressant pour diminuer l'épaisseur de la couche de surface, généralement peu chargée, et donc plus chère à réaliser. La diminution de l'épaisseur de la couche de surface limite les performances mécaniques, l'ajout d'une couche d'équilibrage liée à la couche d'usure permet donc de compenser cette diminution et d'obtenir des résistances au poinçonnement, à la rayure et au ripage équivalentes. Ceci est particulièrement intéressant dans le cas où le revêtement de sol comprend un film décor, pris en sandwich entre une couche de surface rigide composée au moins de PVC et une couche d'équilibrage composée au moins de PVC. Avantageusement, la couche d'usure comprend un film décor, ledit film décor étant en contact avec la couche d'équilibrage.

De façon préférentielle et afin d'obtenir une couche d'envers équilibrée en tant que telle, une première couche d'équilibrage composée au moins de PVC est disposée dans la partie supérieure de la couche d'envers et une seconde couche d'équilibrage réalisée à partir de PVC est disposée dans la partie inférieure de la couche d'envers.

De façon générale et d'une manière bien connue de l'homme du métier, la couche de surface selon l'invention et/ou la couche d'envers selon l'invention et/ou chacune des couches constitutives de la couche de surface ou d'envers peut être obtenue par calandrage de dry blend, par pressage de granulés formulés (compounds) ou de dry blend, ou encore par extrusion.

Les charges pouvant être utilisées sont notamment des charges inorganiques, par exemple des argiles, de la silice, du kaolin, du talc, du carbonate de calcium.

De façon avantageuse, la couche d'équilibrage comprend entre 0% et 90% de charges en masse de la couche, avantageusement entre 10% et 60% en masse de la couche.

Les plastifiants liquides non polymériques, pouvant être utilisés dans chacune des couches du revêtement de sol selon l'invention sont notamment les plastifiants tels que le Diisononyl Phtalate (DINP), le Diisodecyl Phtalate (DIDP), le 2-Ethylhexyl Diphényle Phosphate (DPO), le Téréphtalate dioctylique (DOTP), le 1,2-cyclohexane dicarboxylique acide diisononyl ester (DINCH), les plastifiants de la famille des benzoates, les plastifiants de la famille des adipates, les plastifiants commercialisés sous la Marque PEVALEN^{®} par la société Perstorp, l'huile de soja epoxydée (HSE), l'epoxy stearate d'octyle (ESO), les plastifiants totalement ou partiellement biosourcés comme par exemple les plastifiants de la gamme polysorb^{®} ID 37 commercialisés par la société Roquette Pharma, les plastifiants de la gamme citrofol commercialisés par la société Jungbunzlauer International AG, ou encore les plastifiants de la gamme soft-n-safe commercialisés par la société Danisco. Les plastifiants liquides peuvent être utilisés seuls ou en mélange.

Les panneaux selon l'invention se présentent sous la forme de lames ou de dalles, chaque panneau comprenant une face supérieure destinée à être en contact avec l'utilisateur, une face inférieure destinée à être en contact avec le sol et quatre bords. Les bords des panneaux selon l'invention peuvent être usinés pour présenter des moyens d'assemblage mâles-femelles permettant de relier plusieurs panneaux entre eux. Par moyens d'assemblage mâles-femelles, on entend notamment des moyens comprenant une rainure usinée sur un des bords d'un panneau et configurée pour s'assembler avec une languette usinée sur le bord opposé d'un panneau voisin. Des moyens d'assemblage mâles-femelles s'assemblant perpendiculairement au sol et utilisant des profils d'usinage en forme de queues d'aronde sont également envisagés. De façon générale, les moyens d'assemblage mâles-femelles comprennent un premier profil d'usinage usiné sur un bord d'un panneau et configuré pour s'assembler à un second profil d'usinage usiné sur un bord opposé d'un panneau voisin. Les panneaux ainsi obtenus présentent généralement deux paires de profil d'usinage, chaque paire comprenant un premier et un second profil d'usinage sur deux bords opposés d'un panneau. Les premier et second profils d'usinage de chaque paire ne sont pas forcément similaires, notamment en fonction de la longueur du bord considéré et de la direction d'assemblage désirée. L'assemblage des panneaux peut notamment s'effectuer dans une direction perpendiculaire au sol dans le cas de moyens d'assemblages dits « verticaux », dans une direction parallèle au sol dans le cas de moyens d'assemblage dits « horizontaux », ou encore dans des directions plus complexes, par exemple par rotation et/ou translation d'un moyen d'assemblage mâle dans un moyen d'assemblage femelle. De tels moyens d'assemblage sont notamment décrits dans les documents GB 2 256 023, EP 1 026 341, WO 2012/004701 ou encore WO 2016/030627. De façon préférentielle, les moyens d'assemblage une fois assemblés bloquent le déplacement de deux panneaux à la fois dans une direction verticale, c'est-à-dire perpendiculaire au sol, et dans une direction qui est perpendiculaire au bord du panneau sur lequel le moyen d'assemblage considéré est usiné et parallèle au plan formé par le sol. Les moyens d'assemblage et leurs profils d'usinage peuvent notamment être obtenus par usinage en ligne, par injection moulage du panneau ou encore par découpe, notamment à l'emporte-pièce.

Les panneaux selon l'invention présentent une épaisseur généralement comprise entre 2,5mm et 10mm, préférentiellement entre 4mm et 6mm. Cette épaisseur est mesurée entre la face supérieure de la couche de surface destinée à être en contact avec l'utilisateur et la face inférieure de la couche d'envers destinée à être en contact avec le sol. Les panneaux selon l'invention présentent une largeur comprise entre 8 cm et 70 cm, de préférence entre 15 cm et 25 cm et une longueur comprise entre 50 cm et 240 cm, de préférence entre 100 et 150 cm.

### DESCRIPTION SOMMAIRE DES FIGURES

D'autres avantages et caractéristiques ressortiront mieux de la description qui suit, donnée à titre d'exemple non limitatif, en référence aux figures annexées dans lesquelles :
- la figure 1 illustre, de manière schématique une vue en coupe d'un revêtement de sol selon l'invention dont la couche d'usure comprend au moins une couche de surface rigide;
- la figure 2 illustre, de manière schématique une vue en coupe d'une variante de revêtement de sol selon l'invention ;
- les figures 3 à 6 illustrent, de manière schématique une vue en coupe d'une variante de revêtement de sol selon l'invention dont la couche d'envers comprend au moins une couche d'équilibrage obtenue à partir de PVC;

### DESCRIPTION DETAILLEE DE L'INVENTION

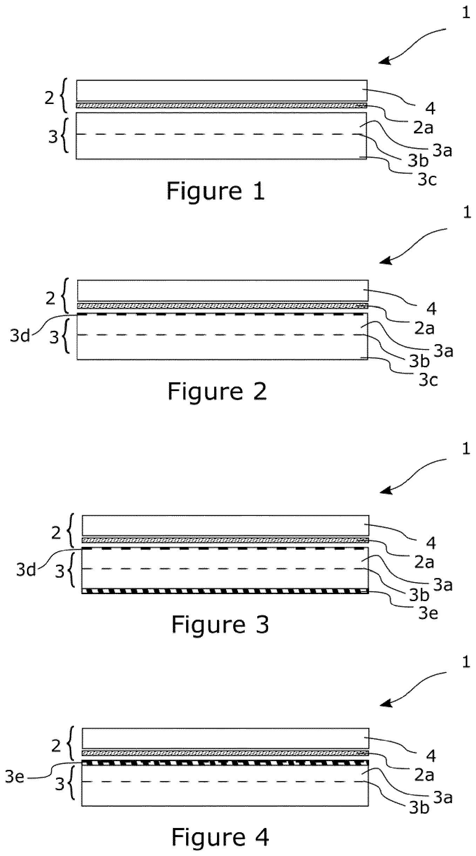

En référence à la figure 1, le revêtement de sol (1) selon l'invention comprend :
- une couche d'usure (2), comprenant une couche de surface rigide (4) dont la dureté Shore D et supérieure ou égale à 60 et le module d'Young supérieur ou égal à 1000 MPa et une couche décor (2a)
- une couche d'envers (3)

La couche décor (2a) peut notamment consister en un film décor pouvant être obtenu à partir d'un film PVC imprimé sur l'une de ces faces. Des techniques d'impression connues sont notamment l'héliogravure. Alternativement, la couche décor (2a) peut également être obtenue à partir de granulés réalisés à partir de PVC puis pressé, par enduction de plastisol, par extrusion filière plate ou encore par calandrage.

De façon générale, une couche d'envers (3) traditionnellement en PVC souple plastifié, peut être obtenue avec une composition comprenant environ 30% en masse de PVC, environ 10% en masse de plastifiants, environ 5% en masse d'additifs (aides-procédé, stabilisants, pigments) et environ 55% en masse de charges.

La couche d'envers (3) est par exemple constituée d'une première couche réalisée à partir de PVC (3a) destinée à être liée à la couche d'usure (2), d'une seconde couche (3c) et d'une armature de renfort (3b) liée entre la première couche (3a) et la seconde couche (3c). Les couches (3a) et (3c) sont par exemple obtenues à partir de PVC plastifié chargé et formées par calandrage. La couche d'envers (3) peut également être obtenue par pressage de granulés fabriqués à partir de PVC, par enduction de plastisol, ou encore par extrusion filière plate. La réalisation de cette couche par calandrage reste néanmoins son mode de fabrication privilégié en terme de coût et de performances mécaniques obtenues.

Alternativement et en référence à la figure 2, le revêtement de sol (1) selon l'invention comprend une première armature de renfort (3b) et un seconde armature de renfort (3d), par exemple sous la forme de deux grilles de fibres de verre.

De façon particulière et en référence aux figures 3, 4 et 5, la couche d'envers (3) peut comprendre au moins une première couche d'équilibrage (3e) réalisée à partir de PVC. Dans une première variante, selon la figure 3, ladite couche d'équilibrage est disposée dans la partie inférieure de la couche d'envers (3), de sorte qu'une face de la couche d'équilibrage (3e) soit en contact avec le sol.

Alternativement, cette couche d'équilibrage (3e) peut être disposée dans la partie supérieure de la couche d'envers (3), tel qu'illustré sur la figure 4, de sorte qu'une face de la couche d'équilibrage (3e) soit en contact avec la couche d'usure (2). Cette position de la couche d'équilibrage permet avantageusement de supprimer l'armature de renfort tout en conservant de bonne caractéristiques de stabilité dimensionnelle. Cette position permet également de diminuer l'épaisseur de la couche de surface rigide (4) tout en conservant de très bonnes propriétés mécaniques et de résistance au poinçonnement, à la rayure et au ripage, tout en diminuant le coût de fabrication du revêtement de sol.

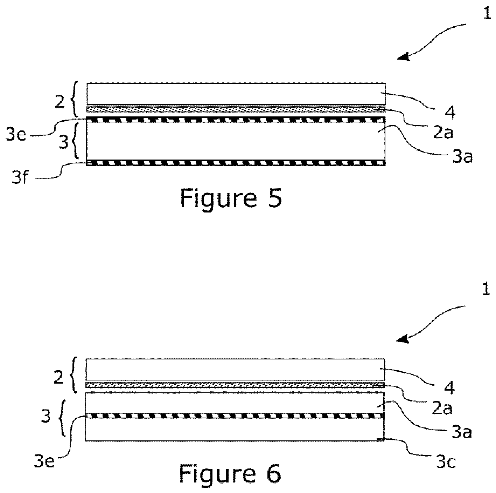

Alternativement et en référence à la figure 5, la couche d'envers (3) peut comprendre au moins une première couche d'équilibrage (3e) et une seconde couche d'équilibrage (3f) réalisées à partir de PVC. Les couches d'équilibrage (3e, 3f) étant respectivement disposées dans la partie inférieure et supérieure de la couche d'envers (3). La première couche d'équilibrage (3e) peut notamment être liée à la couche d'usure (2). La seconde couche d'équilibrage (3f) peut notamment être disposée pour être en contact avec le sol. Cette configuration particulière permet notamment l'obtention d'une couche d'envers (3) équilibrée et stable dimensionnellement, sans nécessité l'ajout d'une armature de renfort.

Dans le but d'obtenir une couche d'envers (3) particulièrement stable, celle-ci peut également être constituée d'une unique couche d'équilibrage obtenue à partir de PVC.

En référence à la figure 6, le revêtement de sol (1) selon l'invention peut également comprendre :
- une couche d'usure (2), comprenant une couche de surface rigide obtenue à partir de PVC (4) et une couche décor (2a)
- une couche d'envers (3), comprenant une couche d'équilibrage (3e) disposée en position centrale et obtenue à partir de PVC et liée entre un première couche d'envers (3a) et un deuxième couche d'envers (3c) traditionnellement obtenues à partir de PVC souple plastifié et chargé.

Dans cet exemple, la couche d'équilibrage (3e) permet d'améliorer la stabilité dimensionnelle et le ripage du revêtement de sol obtenu sans nécessiter l'utilisation d'une armature de renfort tel qu'un voile de verre.

### EXEMPLES 1 A 3 :

Des dalles selon la figure 2 sont fabriquées.

Ces dalles sont obtenues par pressage statique (3 minutes de chauffe à 180°C et 10 bars suivies de 4 minutes de refroidissement sous 10 bars) :
- D'une couche d'envers (3), comprenant deux couches obtenues à partir de granulés en PVC souple plastifié et teinté (3a et 3c), lesdits granulés étant précédemment fabriqués par mélangeage (« compoundage » en langue anglaise)
- De deux grilles de verre de renfort (3b et 3d) d'environ 50 g/m² (68 tex, 200 µm d'épaisseur) intercalées entre les deux couches (3a, 3c) et entre la couche d'envers (3) et la couche d'usure (2).
- D'une couche d'usure (2) comprenant un film décor imprimé PVC (2a) sur lequel est laminé une couche de surface rigide transparente (4) de 2 mm réalisée à partir de PVC.

Après refroidissement à température ambiante, ces dalles sont recouvertes d'une fine couche de vernis base acrylate (non représenté) d'environ 25 g/m², sur une ligne d'enduction.

Les granulés constitutifs des sous-couches d'envers (3a et 3c) comprennent les ingrédients suivants exprimés en pourcentages massiques : 41% de PVC, 16% de plastifiant (DINP), 2% d'additifs (aides-procédé, stabilisants thermiques, pigments) et 41% de carbonate de calcium (CaCO₃). Les caractéristiques des sous couches d'envers (3b, 3d) sont résumées dans le tableau 2.

La couche de surface (4) transparente est quant à elle obtenue par calandrage d'un mélange sec (« dry blend » en langue anglaise) d'une formule à base de PVC rigide. Trois couches de surface transparentes sont obtenues à partir de PVC rigide (CU 1, CU 2, CU 3) selon l'invention ainsi qu'une couche de surface classique (CU REF), de référence. Les compositions des couches (CU 1, CU 2, CU 3 et CU REF) sont données dans le tableau 1. Les caractéristiques physico-chimique de ces couches sont également détaillées dans le tableau 2.

Quatre dalles (exemple 1 à 3 et référence) sont ainsi produites à partir de chacune des couches CU 1 à CU 3 et CU REF. Ces dalles sont auto-plombantes, et sont donc généralement posées au sol sans colle, grâce à un système d'assemblage mâle - femelle sous forme de queues d'arondes.

**TABLEAU 1 : COMPOSITION DES DALLES**

| Type / % Massiques | Exemple 1 | Exemple 2 | Exemple 3 | Référence |
|---|---|---|---|---|
| **Couche d'envers (3)** | **PVC souple** | **PVC souple** | **PVC souple** | **PVC souple** |
| PVC | 41% | 41% | 41% | 41% |
| Plastifiant liquide | DINP / 16% | DINP / 16% | DINP / 16% | DINP / 16% |
| Charges | CaCO₃ / 41% | CaCO₃ / 41% | CaCO₃ / 41% | CaCO₃ / 41% |
| Additifs | 2% | 2% | 2% | 2% |

| **Couche de surface (4)** | **PVC rigide (CU1)** | **PVC rigide (CU2)** | **PVC rigide (CU3)** | **PVC souple (CU REF)** |
|---|---|---|---|---|
| PVC / K-wert | 85,4% / K60 | 85,4% / K50 | 85,4% / K60 | 72% / K64 |
| Plastifiant liquides | DINCH + ESO / 7,2% | DINCH + ESO / 7,2% | DINCH + ESO / 7,2% | DINCH + ESO / 26,7% |
| Additifs^{**} | 1,4% | 1,4% | 1,4% | 1,3% |
| Absorbeurs de chocs | Clearstrength W300 / 5,9% | Clearstrength W300 / 5,9% | Elvaloy 741 / 5,9% | Sans |

Les additifs comprennent notamment les lubrifiants, les aide-procédés, les stabilisants thermiques ainsi que les pigments éventuels.

**Tableau 2 : Propriétés caractéristiques des dalles obtenues**

| | | Exemple 1 | Exemple 2 | Exemple 3 | Référence |
|---|---|---|---|---|---|
| Couche concernée | Sous-couche d'envers (3a et 3c) | CU 1 rigide | CU 2 rigide | CU 3 rigide | CU REF (souple) |
| Epaisseur | 4 mm | 2 mm | 2 mm | 2 mm | 2 mm |
| Aspect | Pigmenté | Transparent | Transparent | Transparent | Transparent |
| Dureté shore D | (51 ± 1) | (70 ± 4) | (66 ± 1) | (71 ± 1) | (46 ± 1) |
| Tg (tan δ) en °C (1) | 39,74 | 77,8 | 74,1 | 67,8 | 47,2 |
| Module élastique (MPa) | 119 | 2429 | 1778 | 1894 | 60 |
| (2) | | | | | |
| **Force maximale** (MPa) ⁽²⁾ | 9 | 46 | 36 | 32 | 21 |
| **Allongement** à rupture (%) ⁽²⁾ | 70 | 64 | 64 | 155 | 210 |
| Poinçonnement statique (norme EN 433)^{∗} | Non applicable | 0,02 | 0,03 | 0,05 | 0,13 |
| Stabilité dimensionnelle moyenne (Norme EN 434)^{∗} | Non applicable | 0,09 | 0,15 | 0,09 | 0,06 |
| Résistance au ripage (selon cahier du CSTB n°3562) : contrainte critique | Non applicable | +++ (> 37 **N/mm²)** | ++ (> 34 **N/mm²)** | ++ (> 31 **N/mm²)** | (< 19 N/mm²) |

| | | | | | |
|---|---|---|---|---|---|
| ⁽¹⁾ Tg déterminée par rhéologie sur un rhéomètre plan / plan de type Thermofisher Haake Mars, équipé d'un mobile de 25 mm : rampe à 5,2°C/min de 180°C à 25°C ⁽²⁾ Propriétés mécaniques en traction déterminées selon la norme ISO 527 sur un banc de traction type Shimadzu Autograph AGS-X, sur des échantillons en forme d'haltères de 58 mm (longueur entre les mors) x 5 mm (largeur droite hors zone d'accroche) x 2 mm d'épaisseur, à une vitesse de 10 mm/min | | | | | |

Concernant le test de résistance au ripage, les contraintes indiquées dans le tableau 2 correspondent aux contraintes appliquées pour lesquelles la couche d'usure, et en particulier le film décor imprimé n'ont pas été perforés.

Les résultats démontrent une très forte amélioration de la résistance au ripage pour les dalles selon l'invention, les exemples 1 à 3 obtenant tous une résistance supérieure à 35 N/mm².Cette valeur de contrainte permet d'obtenir une dalle de niveau r1, voire r2. Le poinçonnement statique des dalles selon l'invention est également considérablement réduit grâce à l'emploi d'une couche d'usure comprenant un couche en PVC rigide selon l'invention.

### EXEMPLES 4 ET 5 :

Des lames selon la figure 6, correspondant à la construction de lames LVT *(« Luxury Vinyl Tiles »*), ont été fabriquées selon le tableau 3, par pressage statique (3 minutes de chauffe à 165°C et 10 bars suivies de 4 minutes de refroidissement sous 10 bars) :
- Les lames comprennent une couche d'envers (3):
   ∘ réalisée uniquement à partir de PVC souple plastifié pour la lame de référence (REF 2)
   ∘ réalisée à partir d'un empilement d'une couche d'équilibrage en PVC rigide chargé (3e) liée entre deux couches plus fines en PVC souple (3a, 3c)
- d'une couche d'usure (2) comprenant un film décor imprimé PVC (2a) sur lequel est laminée une couche de surface transparente (4) de 0,5 mm, en PVC souple (exemple 4 de référence), ou en PVC rigide (exemple 5). Les couches d'usure de l'exemple 4 et de l'exemple de référence n°2 reprennent la composition de la couche d'usure de référence CU REF du tableau 2 précédent.

Les couches en PVC souple (3a, 3c) comprennent les ingrédients suivants exprimés en pourcentages massiques: 29% de PVC, 9% de plastifiants (DINP), 8% d'additifs (aides-procédé, stabilisants thermiques, pigments) et 54% de carbonate de calcium (CaCO₃).

La couche en PVC rigide d'équilibrage (3e) comprend les ingrédients suivants exprimés en pourcentages massiques: 50% de PVC, 4,5% de plastifiants, 0,5% d'additifs (aides-procédé, stabilisants thermiques, pigments), 3,5% d'absorbeurs de chocs et 41,5% de carbonate de calcium (CaCO₃).

Les caractéristiques physico-chimiques des couches (3e) et (3a, 3c) ainsi obtenues sont résumées dans le tableau 4.

La couche de surface transparente (4) est quant à elle obtenue par calandrage d'un dry blend d'une formule à base de PVC souple ou de PVC rigide.

Les lames obtenues sont auto-plombantes, et sont donc généralement posées au sol sans colle, grâce à un système d'assemblage mâle - femelle sous forme de clics, décrits dans la demande de brevet WO 2016/030627 du demandeur.

**TABLEAU 3 : COMPOSITION DES LAMES LVT**

| Type / % Massiques | Exemple 4 | | Exemple 5 | | Référence 2 |
|---|---|---|---|---|---|
| **Couche d'envers (3)** | Couche souple 3a, liée à la couche d' équilibrage 3e liée à la couche souple 3c | | | | PVC souple |
| | Couche souple (3a) | Couche d'équilibrage (3e) | | Couche souple (3c) | |
| PVC | 29% | 50% | | 29% | 29% |
| Plastifiant | DINP; 9% | DINCH + ESO 4,2% | | DINP; 9% | DINP/9% |
| Charges | CaCO₃; 54% | CaCO₃ ; 41,5% | | CaCO₃; 54% | CaCO₃ / 54% |
| Additifs | 0,5% | 0,8% | | 0,5% | 8% |
| Absorbeurs de chocs | n.a. | Clearstrength W300: 3,5% | | n.a. | n.a |
| **Epaisseur** | 1,35 mm | 3 mm | | 1,35 mm | 5,7 mm |

| **Couche de surface (4)** | **PVC souple (CU REF)** | | **PVC rigide (CU5)** | | **PVC souple (CU REF)** |
|---|---|---|---|---|---|
| PVC / K-wert | 72% / K64 | | 84% / K50 | | 72% / K64 |
| Plastifiant total | DINCH + ESO / 26,7% | | ESO / 4,2% | | DINCH + ESO / 26,7% |
| Autres additifs | 1,3% | | 1,3% | | 1,3% |
| Absorbeurs de chocs | Sans | | Clearstrength W300 / 11,7% | | Sans |

| | | | | | |
|---|---|---|---|---|---|
| n.a. : Non applicable | | | | | |

Les additifs comprennent notamment les lubrifiants, les aide-procédés, les stabilisants thermiques ainsi que les pigments éventuels.

Les propriétés des différentes couches constitutives des lames obtenues sont résumées dans le tableau 4.

**Tableau 4 : Propriétés caractéristiques des couches de LVT fabriquées**

| Couche concernée | couche souple (3a ou 3c) | couche d'équilibrage (3e) | (CU5) rigide |
|---|---|---|---|
| Dureté shore D | (66 ± 1) | (79 ± 1) | (78 ± 1) |
| Tg (tan 8) en °C ⁽¹⁾ | 54,05 | 74,2 | 74,8 |
| Module élastique (MPa) ⁽²⁾ | 337 | 2001 | 2408 |
| Force maximale (MPa) ⁽²⁾ | 6 | 18 | 51 |
| Allongement à rupture (%) (2) | 30 | 4 | 12,4 |

| | | | |
|---|---|---|---|
| ⁽¹⁾ Tg déterminée par rhéologie sur un rhéomètre plan / plan de type Thermofisher Haake Mars, équipé d'un mobile de 25 mm : rampe à 5,2°C/min de 180°C à 25°C ⁽²⁾ Propriétés mécaniques en traction déterminées selon la norme ISO 527 sur un banc de traction type Shimadzu Autograph AGS-X, sur des échantillons en forme d'altères de 58 mm (longueur entre les mors) x 5 mm (largeur droite hors zone d'accroche) x 2 mm d'épaisseur, à une vitesse de 10 mm/min | | | |

Les propriétés de lames de LVT fabriquées selon l'architecture décrite dans le tableau 3, sont indiquées dans le tableau 5 :

**Tableau 5 : Propriétés caractéristiques de lames de LVT fabriquées**

| | Exemple 4 | Exemple 5 | Référence 2 |
|---|---|---|---|
| Poinçonnement statique (norme EN 433) | 0,05 | 0,03 | 0,29 |
| Stabilité dimensionnelle moyenne (Norme EN 434) | 0,12 | 0,08 | 0,11 |
| Résistance à la rayure^{∗} | -/+ | +++ | -/+ |

| | | | |
|---|---|---|---|
| ^{∗}Résistance à la rayure évaluée qualitativement après 10 cycles à 25 rpm, sur un Taber linéaire équipé d'une pointe en carbure de Tungstène d'1mm. | | | |

Les résultats démontrent que le poinçonnement statique des dalles selon l'invention est réduit grâce à l'emploi d'une couche d'équilibrage (3e). L'utilisation d'une couche d'usure comprenant un couche en PVC rigide selon l'invention dans l'exemple 5 permet d'autre part de grandement améliorer la résistance à la rayure.

## Revendications

1. Panneau multicouche (1) pour la réalisation d'un revêtement de sol, ledit panneau comprenant une couche d'usure (2) présentant une couche de surface (4) composée au moins de PVC, ladite couche d'usure (2) étant liée à une couche d'envers (3) composée d'au moins une matière thermoplastique, d'un plastifiant et de charges, ***caractérisé en ce que*** la couche de surface (4) présente une dureté Shore D supérieure ou égale à 60, un module d'Young supérieur ou égal à 1000 Mpa et des absorbeurs de chocs.

2. Panneau selon la revendication 1, ***caractérisé en ce que*** la couche de surface (4) présente une dureté Shore D supérieure ou égale à 70.

3. Panneau selon la revendication 1, ***caractérisé en ce que*** la couche de surface (4) présente un module d'Young supérieur ou égal à 1500 MPa.

4. Panneau selon la revendication 1, ***caractérisé en ce que*** la couche de surface (4) est transparente.

5. Panneau selon la revendication 1, ***caractérisé en ce que*** la proportion d'absorbeurs de chocs en masse de la couche de surface (4) est inférieure à 25 %, et est préférentiellement comprise entre 2,5 % et 15 %.

6. Panneau selon la revendication 1, ***caractérisé en ce que*** les absorbeurs de chocs sont des particules polymériques élastomériques.

7. Panneau selon la revendication 1, ***caractérisé en ce que*** les absorbeurs de chocs sont des plastifiants polymériques.

8. Panneau selon la revendication 1, ***caractérisé en ce que*** la composition de la couche de surface (4) présente une température de transition vitreuse (Tg) comprise entre 60°C et 80°C, plus préférentiellement entre 70°C et 80°C.

9. Panneau selon la revendication 1, ***caractérisé en ce que*** la composition de la couche de surface (4) comprend au moins un plastifiant liquide, la proportion de plastifiant liquide en masse de la couche de surface étant inférieure à 10 %, préférentiellement inférieure ou égale à 5%.

10. Panneau selon la revendication 1, ***caractérisé en ce que*** la couche de surface (4) présente une épaisseur comprise entre 0,1 et 3mm, préférentiellement entre 0,3 et 2,5mm, plus préférentiellement entre 0,5 et 2mm.

11. Panneau selon la revendication 1, ***caractérisé en ce que* la** couche de surface (4) présente une épaisseur comprise entre 5 et 30% de l'épaisseur totale du panneau.

12. Panneau selon la revendication 1, ***caractérisé en ce que*** la couche d'envers (3) comprend une couche d'équilibrage (3e) composée au moins de PVC.

13. Panneau selon la revendication 12, ***caractérisé en ce que*** la couche d'équilibrage (3e) présente une dureté Shore D supérieure ou égale à 50 et un module d'Young supérieur ou égal à 500 MPa.

14. Panneau selon la revendication 12, ***caractérisé en ce que*** la couche d'équilibrage (3e) est liée à la couche d'usure (2).

## Patentansprüche

1. Mehrschichtige Platte (1) zur Herstellung eines Bodenbelags, dabei enthält diese Platte eine Verschleißschicht (2), die eine Oberflächenschicht (4) aufweist, die mindestens aus PVC besteht, diese Verschleißschicht (2) ist mit einer Rückseite, bestehend aus mindestens einer thermoplastischen Schicht, einem Weichmacher und Füllstoffen, verbunden, ***dadurch gekennzeichnet, dass die*** Oberflächenschicht (4) eine Shore-Härte D größer oder gleich 60, ein Young- Modul größer oder gleich 1000 Mpa und Dämpfer aufweist.

2. Platte nach Anspruch 1, ***dadurch gekennzeichnet, dass*** die Oberflächenschicht eine Shore-Härte D größer oder gleich 70 hat.

3. Platte nach Anspruch 1, ***dadurch gekennzeichnet, dass*** die Oberflächenschicht (4) ein Young- Modul größer oder gleich 1500 MPa aufweist.

4. Platte nach Anspruch 1, ***dadurch gekennzeichnet, dass*** die Oberflächenschicht (4) transparent ist..

5. Platte nach Anspruch 1, ***dadurch gekennzeichnet, dass*** der Anteil der Dämpfer an der Masse der Oberflächenschicht (4) kleiner ist als 25 %, und vorzugsweise zwischen 2,5 % und 15 % liegen sollte.

6. Platte nach Anspruch 1, ***dadurch gekennzeichnet, dass*** die Dämpfer elastomere Polymerteilchen sind.

7. Platte nach Anspruch 1, ***dadurch gekennzeichnet, dass*** die Dämpfer polymere Weichmacher sind.

8. Platte nach Anspruch 1, ***dadurch gekennzeichnet, dass*** die Zusammensetzung der Oberflächenschicht (4) eine Glasübergangstemperatur (Tg) zwischen 60⁰ C und 80⁰ C aufweist, noch besser zwischen 70⁰ C und 80⁰ C.

9. Platte nach Anspruch 1, ***dadurch gekennzeichnet, dass*** die Zusammensetzung der Oberflächenschicht (4) mindestens einen flüssigen Weichmacher enthält, der Anteil des flüssigen Weichmachers an der Masse der Oberflächenschicht liegt dabei unter 10 %, vorzugsweise kleiner oder gleich 5 %.

10. Platte nach Anspruch 1, ***dadurch gekennzeichnet, dass*** die Oberflächenschicht (4) eine Dicke zwischen 0,1 und 3mm aufweist, besser noch zwischen 0,3 und 2,5mm, und am besten zwischen 0,5 und 2mm.

11. Platte nach Anspruch 1, ***dadurch gekennzeichnet, dass*** die Oberflächenschicht (4) eine Dicke zwischen 5 und 30 ⁰/0 der Gesamtdicke der Platte aufweist.

12. Platte nach Anspruch 1, ***dadurch gekennzeichnet, dass*** die Rückseite (3) eine Ausgleichsschicht (3e), bestehend mindestens aus PVC, enthält.

13. Platte nach Anspruch 12, ***dadurch gekennzeichnet, dass*** die Ausgleichsschicht (3e) eine Shore- Härte D von größer oder gleich 50 und ein Young- Modul größer oder gleich 50 MPa aufweist.

14. Platte nach Anspruch 12, ***dadurch gekennzeichnet, dass*** die Ausgleichsschicht (3e) mit der Verschleißschicht (2) verbunden ist.

## Claims

1. A multilayer panel (1) for making a floor covering, said panel comprising a wear layer (2) comprising a surface layer (4) made up at least of PVC, said wear layer (2) being bonded to a back layer (3) being made up of at least a thermoplastic material, a plasticizer and fillers, ***characterized in that*** the surface layer has a Shore D hardness greater than or equal to 60, and a Young's modulus greater than or equal to 1000 MPa and impact absorbers.

2. The panel according to claim 1, ***characterized in that*** the surface layer (4) has a Shore D hardness greater than or equal to 70.

3. The panel according to claim 1, ***characterized in that*** the surface layer (4) has a Young's modulus greater than or equal to 1500 MPa.

4. The panel according to claim 1, ***characterized in that*** the surface layer (4) is transparent.

5. The panel according to claim 1, ***characterized in that*** the proportion of impact absorbers by weight of the surface layer (4) is less than 25%, and is preferably between 2.5% and 15%.

6. The panel according to claim 1, ***characterized in that*** the impact absorbers are elastomeric polymeric particles.

7. The panel according to claim 1, ***characterized in that*** the impact absorbers are polymeric plasticizers.

8. The panel according to claim 1, ***characterized in that*** the composition of the surface layer (4) has a glass transition temperature (Tg) between 60°C and 80°C, more preferably between 70°C and 80°C.

9. The panel according to claim 1, ***characterized in that*** the composition of the surface layer (4) comprises at least one liquid plasticizer, the proportion of liquid plasticizer by weight of the surface layer being less than 10%, preferably less than or equal to 5%.

10. The panel according to claim 1, ***characterized in that*** the surface layer (4) has a thickness of between 0.1 and 3 mm, preferably between 0.3 and 2.5 mm, more preferably between 0.5 and 2 mm.

11. The panel according to claim 1, ***characterized in that*** the surface layer (4) has a thickness of between 5 and 30% of the total thickness of the panel.

12. The panel according to claim 1, ***characterized in that*** the back layer (3) comprises a balancing layer (3e) made up at least of PVC.

13. The panel according to claim 12, ***characterized in that*** the balancing layer (3e) has a Shore D hardness greater than or equal to 50 and a Young's modulus greater than or equal to 500 MPa.

14. The panel according to claim 12, ***characterized in that*** the balancing layer (3e) is bonded to the wear layer (2).
